# EUROPÄISCHE PATENTSCHRIFT

(11) **EP 0 457 188 B1**
(45) Veröffentlichungstag und Bekanntmachung des Hinweises auf die Patenterteilung: **15.03.1995**
(21) Anmeldenummer: 91107521.6
(22) Anmeldetag: 08.05.1991
(51) Int. Cl.: B60J 1/17, B60J 10/04

(54) **Verfahren zur Fixierung eines Fensterführungsprofiles und entsprechende Anordnung**
Method for fastening a window guiding profile and corresponding arrangement
Méthode pour la fixation d'un profil de guidage de fenêtre et arrangement correspondant

(30) Priorität: 17.05.1990 DE 4015928
(43) Veröffentlichungstag der Anmeldung: 21.11.1991
(73) Patentinhaber: METZELER Automotive Profiles GmbH, D-88131 Lindau (DE)
(72) Erfinder: Kranz, Jürgen, W-8990 Lindau/Bodensee (DE); Jörgensen, Per, W-8992 Wasserburg (DE); Andexlinger, Klaus, A-6900 Bregenz (AT); Dehnert, Klaus, W-8990 Lindau/Bodensee (DE)
(74) Vertreter: Preissner, Nicolaus, Dipl.-Ing.

(56) Entgegenhaltungen:
- EP-A- 0 040 588
- DE-A- 2 452 836
- DE-A- 2 707 649
- FR-A- 2 165 091

## Beschreibung

Die Erfindung bezieht sich auf eine Anordnung zur Fixierung eines Fensterführungsprofils am Metallrahmen einer Kraftfahrzeugtür nach dem Oberbegriff des Patentanspruches 1.

Eine derartige Anordnung ist aus der FR-A-2 165 091 bekannt. Bei dieser Anordnung ist zwischen den Metallrahmen der Tür und dem eigentlichen Fensterführungsprofil jeweils auf kurzen Abschnitten ein Profilstück aus relativ hartem Material eingeschaltet, das dazu dienen soll, das Fenster beim Hochkurbeln exakt in den Dichtspalt des eigentlichen Dichtungsprofils zu führen. Ein Ausgleich von Toleranzen des Metallrahmens ist damit jedoch nur in unzureichendem Maße möglich.

Ein weiteres derartiges Fensterführungsprofil und seine entsprechende Halterung ist beispielsweise aus der EP-A-0 182 318 bekannt. Dabei weist der die Fensteröffnung umschließende Metallrahmen der Kraftfahrzeugtür zwei nach außen ragende Stege auf, auf die das entsprechend geformte Fensterführungsprofil aufgesteckt ist. Eine derartige Befestigungsart ist aber ebenfalls mit Schwierigkeiten verbunden, wenn der entsprechende Metallrahmen große Toleranzen aufweist, so daß dann das Fensterführungsprofil nur unzureichend festgelegt werden kann.

Der vorliegenden Erfindung liegt demgegenüber die Aufgabe zugrunde, eine Anordnung zu schaffen, mit der ein (Fortsetzung Seite 2, Zeile 1 der von der Prüfungsabteilung geänderten Beschreibung) Fensterführungsprofil auch unter Ausgleich großer Toleranzen sicher und exakt am Metallrahmen festgelegt werden kann.

Zur Lösung dieser Aufgabe ist erfindungsgemäß vorgesehen, daß der Metallrahmen auf der vom Fensterführungsprofil abgewandten Rückseite vom Kunststoffprofil umschlossen ist und daß die seitlich abragenden Halterungsnasen sowie eine weitere Halterungsnase des Kunststoffprofils in entsprechende Einschnitte des Fensterführungsprofils eingeknöpft sind.

Das bedeutet also, daß das Fensterführungsprofil nicht unmittelbar auf den Metallrahmen aufgesetzt und von diesem gehaltert wird, sondern daß zwischen Metallrahmen und Fensterführungsprofil ein Profilsystem aus starrem Kunststoff eingeschaltet ist, das einerseits zum Toleranzausgleich dient und andererseits die Halterung und Fixierung des Fensterführungsprofils mit entsprechender Verbindung zum Metallrahmen übernimmt.

Das Kunststoffprofil besteht dabei zweckmäßigerweise aus - ggf. glasfaserverstärktem - ABS, d.h. einem zähen Acrylnitril-Butadien-Styrol oder aus Polyamid.
Das Kunststoffprofil kann dabei einen angenähert U-förmigen Querschnitt mit an den freien Schenkelenden nach innen ragenden Nasen aufweisen, die die Stege des Metallrahmens umschließen.

Dabei kann an mindestens einem Schenkelende zusätzlich ein nach außen ragender Ansatz vorgesehen sein, um das Fensterführungsprofil aufzunehmen.

Das Fensterführungsprofil selbst weist einen angenähert U-förmigen, zwischen den freien Stegen des Metallrahmens liegenden Grundkörper auf, von dessen einem freien Schenkelende ein nach außen ragender und eine der Kunststoffprofil-Halterungsnasen umschließender Ansatz und eine schräg nach innen ragende Dichtlippe zur Fensterscheibe hin abragen und von dessen anderem freien Schenkelende ein die andere Halterungsnase umschließender Profilbereich mit einer gegen die Dachunterseite drückenden Dichtleiste ausgeht.

Dabei kann das andere Schenkelende des Grundkörpers zusätzlich einen die Türscheibe von oben und außen umfassenden Profilansatz aufweisen, dessen Außenfläche mit der der gegen die Dachunterseite drückenden Dichleiste fluchtet.

Zur leichteren Anpassung kann das Fensterführungsprofil ferner im Basisbereich des Grundkörpers eine dickenvermindernde Einschnürung aufweisen, die als Gelenk oder Trennstelle dienen kann.

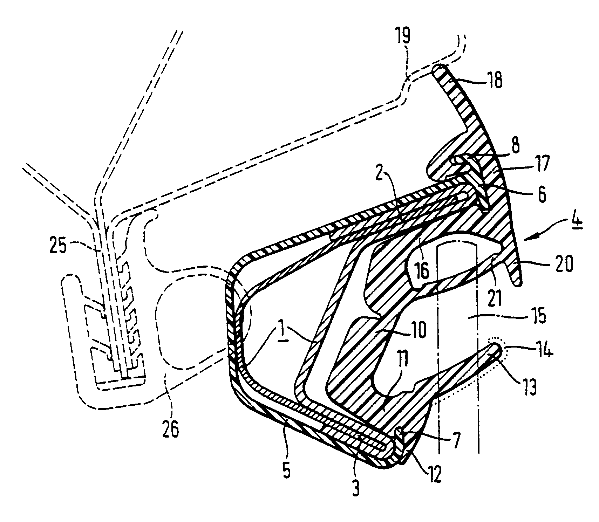

Anhand einer schematischen Zeichnung sind Aufbau und Funktion einer Anordnung nach der Erfindung näher erläutert. Dabei zeigt die einzige Figur einen Querschnitt durch den Metallrahmen einer Kraftfahrzeugtür in deren oberen Bereich unterhalb des Fahrzeugdaches.

Wie man aus der Zeichnung ersieht, weist die Fahrzeugtür im oberen Bereich einen doppelwandigen hohlen Metallrahmen 1 mit zwei nach außen ragenden freien Stegen 2 und 3 auf. Auf diesen Metallrahmen 1 wird üblicherweise das Fensterführungsprofil 4 direkt aufgeknöpft.

Da aber bei großen Fertigungstoleranzen eines solchen Metallrahmens die Halterung sehr unzureichend sein kann, ist erfindungsgemäß ein Toleranzausgleichs- und Halterungssystem in Form eines Kunststoffprofils 5 in folgender Weise zwischengeschaltet.

Dieses Kunststoffprofil 5 umschließt rückseitig den Metallrahmen 1 und die nach außen ragenden Stege 2 und 3 vollständig und erstreckt sich dabei bis über die Enden dieser Stege 2 und 3, wo das Profil 5 nach innen ragende Nasen 6 und 7 aufweist und wobei ggf. auch noch ein nach außen ragender Ansatz 8 vorgesehen sein kann.

Dieses Profil 5 besteht zweckmäßigerweise aus ABS, d.h. Acrylnitril-Butadien-Styrol, das eine hohe Zähigkeit und damit Bruchsicherheit aufweist und sich rückfedernd auslenken läßt. Es ist aber auch möglich, das Profil aus Polyamid oder einem anderen zähen Kunststoff zu fertigen.

Das eigentliche Fensterführungsprofil 4 ist nunmehr auf folgende Weise mit dem Metallrahmen 1 bzw. dem Kunststoffprofil 5 verbunden.

Das Fensterführungsprofil 4 weist einen angenähert U-förmigen Grundkörper 10 auf, der zwischen den freien Stegen 2 und 3 des Metallrahmens liegt. Am Ende des einen Schenkels 11 ist ein nach außen ragener Ansatz 12 vorgesehen, der die Halterungsnase 7 des Profils 5 umschließt. Zusätzlich geht von diesem Schenkel 11 eine schwenkbare Dichtlippe 13 aus, die auf ihrer Außenseite eine Beflockung 14 trägt und von innen gegen die Scheibe 15 im geschlossenen Zustand anliegt.

Der andere Schenkel 16 des Grundkörpers 10 weist an seinem freien Ende einen Profilbereich 17 auf, der die Halterungsnase 6 und den Ansatz 8 des Kunststoffprofils 5 umschließt und damit auch auf dieser Seite eine feste Arretierung des Fensterführungsprofils 4 gewährleistet. An diesen Bereich 17 schließt sich dabei nach oben eine Dichtleiste 18 an, die bei geschlossener Tür gegen die nur gestrichelt dargestellte Dachunterkante 19 drückt, sowie auf der Unterseite des Profilbereichs 17 ein die Türscheibe von oben und außen umfassender Profilansatz 20, der darüber hinaus noch mit einem Steg 21 mit dem Grundkörper 10 verbunden sein kann, um beim Schließen der Scheibe 15 ein Einklappen und Anlegen der Nase 20 an die Scheibe 15 sicherzustellen.

Auf der Innenseite des Metallrahmens 1 wird dieser bzw. das Kunststoffprofil 5 in herkömmlicher Weise über ein auf einen Türausschnittflansch 25 aufgeschobenes Hohlprofil 26 abgedichtet, wobei letztere ebenfalls nur gestrichelt dargestellt sind, da sie zur eigentlichen Erfindung nichts beitragen.

Anhand des dargestellten Ausführungsbeispiels ist erläutert, daß auf einfache Weise mittels des den Metallrahmen umschließenden Kunststoffprofils ein zwischengeschaltetes System geschaffen wurde, das einmal einen Ausgleich von Fertigungstoleranzen des Metallrahmens, z.B. bezüglich der Länge der abragenden Stege 2 und 3, deren Öffnungswinkel oder die Geometrie des hohlen Profilsbereichs, ermöglicht und an den dann gleichzeitig auf einfache Weise das eigentliche Fensterführungsprofil 4 angeschlossen und fixiert werden kann, so daß von außen die Fensterscheibe sicher abgedichtet und stets einwandfrei in gleicher Lage geführt werden kann.

## Patentansprüche

1. Anordnung zur Fixierung eines Fensterführungsprofils (4) am Metallrahmen (1) einer Kraftfahrzeugtür, wobei der Metallrahmen (1) im Querschnitt angenähert U-förmig ausgebildet und von einem Profil (5) aus starrem Kunststoff derart umschlossen ist, daß das Kunststoffprofil (5) sich bis über die freien Stegenden (2, 3) des Metallrahmens (1) erstreckt und diese mit Halterungsnasen (6, 7) zumindest teilweise umschließt, dadurch gekennzeichnet, daß der Metallrahmen (1) auf der vom Fensterführungsprofil (4) abgewandten Rückseite vom Kunststoffprofil (5) umschlossen ist und daß die seitlich abragenden Halterungsnasen (6, 7) sowie eine weitere Halterungsnase des Kunststoffprofils (5) (8) in entsprechende Einschnitte des Fensterführungsprofils (4) eingeknöpft sind.

2. Anordnung nach Anspruch 1, dadurch gekennzeichnet, daß das Kunststoffprofil (5) aus - ggf. glasfaserverstärktem - ABS besteht.

3. Anordnung nach Anspruch 1, dadurch gekennzeichnet, daß das Kunststoffprofil aus Polyamid besteht.

4. Anordnung nach Anspruch 1, dadurch gekennzeichnet, daß das Kunststoffprofil (5) einen angenähert U-förmigen Querschnitt mit an den freien Schenkelenden nach innen ragenden Nasen (6, 7) aufweist.

5. Anordnung nach Anspruch 4, dadurch gekennzeichnet, daß an mindestens einem Schenkelende zusätzlich ein nach außen ragender Ansatz (8) vorgesehen ist.

6. Anordnung nach Anspruch 1, dadurch gekennzeichnet, daß das Fensterführungsprofil (4) einen angenähert U-förmigen, zwischen den freien Stegen (2, 3) des Metallrahmens (1) liegenden Grundkörper (10) aufweist, von dessen einem freien Schenkelende (11) ein nach außen ragender und eine der Kunststoffprofil-Halterungsnasen (7) umschließender Ansatz (12) und eine schräg nach innen ragende Dichtlippe (14) zur Fensterscheibe (15) hin abragen und von dessen anderem freien Schenkelende (16) ein die andere Halterungsnase (6) umschließender Profilbereich (17) mit einer gegen die Dachunterseite (19) drückenden Dichtleiste (18) ausgeht.

7. Anordnung nach Anspruch 6, dadurch gekennzeichnet, daß das andere Schenkelende (16) des Grundkörpers (10) einen die Türscheibe (15) von oben und außen umfassenden Profilansatz (20) aufweist, dessen Außenfläche mit der der gegen die Dachunterseite drückenden Dichtleiste (18) fluchtet.

8. Anordnung nach Anspruch 6, dadurch gekennzeichnet, daß das Fenterführungsprofil (4) im Basisbereich des Grundkörpers (10) eine dickenvermindernde Einschnürung (4) aufweist.

## Claims

1. Arrangement for fastening a window guiding profile (4) to the metal frame (1) of a motor vehicle door, wherein the metal frame (1) is of approximately U-shaped construction in cross section and is surrounded by a profile (5) made of rigid plastics material in such a way that the plastics profile (5) extends to a point beyond the free ends (2, 3) of the webs of the metal frame (1) and at least partially surrounds the said ends by means of mounting noses (6, 7), characterized in that the metal frame (1) is surrounded, on the rear side which faces away from the window guiding profile (4), by the plastics profile (5) and that the laterally projecting mounting noses (6, 7), and also a further mounting nose (8) in the plastics profile (5), are buttoned into corresponding recesses in the window guiding profile (4).

2. Arrangement according to Claim 1, characterized in that the plastics profile (5) consists of ABS - which may, optionally, be reinforced with glass fibre.

3. Arrangement according to Claim 1, characterized in that the plastics profile consists of polyamide.

4. Arrangement according to Claim 1, characterized in that the plastics profile (5) has an approximately U-shaped cross section with inwardly projecting noses (6, 7) at the free shank ends.

5. Arrangement according to Claim 4, characterized in that an outwardly projecting extension (8) is provided on at least one shank end.

6. Arrangement according to Claim 1, characterized in that the window guiding profile (4) has an approximately U-shaped base element (10) which is located between the free webs (2, 3) on the metal frame (1), from one free shank end (11) of which there project, towards the window-glass (15), an extension (12) projecting outwards and surrounding one of the plastics profile mounting noses (7) and a sealing lip (14) projecting obliquely inwards, and from the other free shank end (16) of which there emanates a profile region (17) which surrounds the other mounting nose (6) and has a sealing strip (18) that presses against the underside (19) of the roof.

7. Arrangement according to Claim 6, characterized in that the other shank end (16) of the base element (10) has a profile extension (20) which encompasses the window-glass (15) in the door from above and from the outside, and the outer face of which aligns with the sealing strip (18) which presses against the underside of the roof.

8. Arrangement according to Claim 6, characterized in that the window guiding profile (4) has, in the bottom region of the base element (10), a thickness-reducing constriction (4).

## Revendications

1. Dispositif pour fixer un profilé de guidage de vitre (4) sur le cadre métallique (1) d'une portière de véhicule automobile, dans lequel le cadre métallique (1) a sensiblement une forme en U en coupe transversale et est entouré d'un profilé (5) en une matière plastique rigide de telle sorte que le profilé en matière plastique (1) s'étende jusque sur les extrémités libres (2,3) des hampes du cadre métallique (1) et entoure au moins partiellement ces extrémités par des becs de retenue (6,7), caractérisé par le fait que le cadre métallique (1) est entouré, sur la face arrière éloignée du profilé de guidage de vitre (15), du profilé en matière plastique (5) et que les becs de retenue (6,7), qui font salle latéralement, ainsi qu'un autre bec de retenue (8) du profilé en matière plastique (5) sont enfilés dans des encoches correspondantes du profilé de guidage de vitre (4).

2. Dispositif suivant la revendication 1, caractérisé par le fait que le profilé en matière plastique (5) est en ABS - éventuellement renforcé par des fibres de verre.

3. Dispositif suivant la revendication 1, caractérisé par le fait que le profilé en matière plastique est en polyamide.

4. Dispositif suivant la revendication 1, caractérisé par le fait que le profilé en matière plastique (5) a une section transversale sensiblement en forme de U comportant des becs (6,7) qui font saillie vers l'intérieur, aux extrémités libres des branches.

5. Dispositif suivant la revendication 4, caractérisé par le fait qu'en outre un prolongement (8) qui fait salle extérieurement, est prévu sur au moins une extrémité des branches.

6. Dispositif suivant la revendication 1, caractérisé par le fait que le profilé de guidage de vitre (4) comporte un corps de base (10) sensiblement en forme de U, qui est situé entre les hampes libres (2,3) du cadre métallique (1), et qu'à partir d'une extrémité libre (11) d'une branche de ce corps font saillie, en direction de la vitre (15), un prolongement (12) qui fait salle vers l'extérieur et entoure l'un des becs de fixation (7) du profilé en matière plastique, et une lèvre d'étanchéité (14) qui fait saillie obliquement vers l'intérieur vers la vitre (15), et qu'une partie profilée (17), qui entoure l'autre bec de fixation (6) s'étend, par un rebord d'étanchéité (18), qui s'applique sur la face inférieure (19) du toit, à partir de l'autre extrémité libre (16) de ladite branche.

7. Dispositif suivant la revendication 6, caractérisé par le fait que l'autre extrémité (16) de la branche du corps de base (10) a un prolongement profilé (20), qui entoure en haut et à l'extérieur la vitre (15) de la portière et dont la surface extérieure est alignée avec le rebord d'étanchéité (18) qui s'applique sur la face inférieure du toit.

8. Dispositif suivant la revendication 6, caractérisé par le fait que le profilé de guidage de vitre (14) comporte, au niveau de la base du corps de base (10), un rétrécissement (4) qui en réduit l'épaisseur.
